# DEMANDE DE BREVET EUROPEEN

(11) **EP 1 418 769 A1**
(43) Date de publication de la demande: **12.05.2004**
(21) Numéro de dépôt: 03300191.8
(22) Date de dépôt: 31.10.2003
(51) Int. Cl.: H04Q 1/14

(54) **Répartiteur de télécommunication**

(30) Priorité: 08.11.2002 FR 0214011
(71) Demandeur: Nexans, 75008 Paris (FR)
(72) Inventeur: Guidez, Michel, 08200 Sedan (FR)
(74) Mandataire: Lenne, Laurence

(57) **Abrégé**

La présente invention concerne un répartiteur de télécommunication 101. Ce répartiteur 101 est plus particulièrement destiné à être installé dans un environnement extérieur à l'intérieur d'une armoire pour la réalisation des interconnexions entre des abonnés et des équipements de réseau via des câbles tels que des câbles téléphoniques ayant une pluralité de paires de fils de cuivre. Ce répartiteur 101 de télécommunication comporte une pluralité de moyens de fixation du type ferme 11, chacun desdits moyens de fixation 11 étant destiné à recevoir une réglette de connexion, et un support 17, 18 comportant ladite pluralité de moyens de fixation 11. Ledit support est rotatif autour d'un axe de rotation OO'.

## Description

La présente invention concerne un répartiteur de télécommunication. Ce répartiteur est plus particulièrement destiné à être installé à l'intérieur d'une armoire, elle-même placée dans un environnement extérieur, pour la réalisation des interconnexions entre des abonnés et des équipements de réseau via des câbles tels que des câbles téléphoniques ayant une pluralité de paires de fils de cuivre.

Un tel répartiteur comporte une pluralité de réglettes qui assure le brassage de conducteurs multiples, notamment entre des abonnés et des cartes électroniques du réseau de télécommunication. Cette pluralité de réglettes est organisée en deux ensembles ; un premier ensemble assure la connexion avec les abonnés via des câbles comportant une pluralité de paires torsadées et un deuxième ensemble assure la connexion avec les cartes. Les deux ensembles sont reliés par des jarretières, c'est à dire un court segment de câble servant à établir une connexion entre deux réglettes.

Très souvent, le répartiteur se trouve dans un environnement extérieur tel qu'une rue pour être au plus près des abonnés et assurer des services du type ADSL (Asymmetrical Digital Subscriber Line). Dès lors, le répartiteur doit être protégé de l'eau et de toute autre forme de pollution extérieure et se trouve généralement dans une armoire de protection. L'armoire doit également permettre un accès facile aux réglettes pour intervenir ou réintervenir sur les différentes connexions tout en assurant une densité suffisante de réglettes.

Une solution consiste à utiliser des réglettes disposées parallèlement entre elles et verticalement selon leur axe longitudinal à l'intérieur de l'armoire, les faces de connexion de chacune des réglettes étant perpendiculaires à la face d'entrée de l'armoire. Chacune des réglettes peut basculer et se retrouver en position horizontale au niveau du sol à l'extérieur de l'armoire, permettant ainsi une intervention sur chacune des réglettes.

Toutefois, sa mise en oeuvre pose certaines difficultés.

Ainsi, cette solution nécessite de câbler les réglettes à l'extérieur de l'armoire. Un tel câblage extérieur peut entraîner une intrusion d'eau, par exemple en cas de pluie, ou une contamination par des poussières.

En outre, la personne en charge de l'intervention doit câbler en position basse et donc peu pratique.

De plus, cette solution impose de prévoir une place supplémentaire devant le répartiteur pour le déploiement des réglettes.

La présente invention vise à fournir un répartiteur de télécommunication comportant une pluralité de réglettes de connexions permettant de réaliser le câblage entièrement à l'intérieur d'une armoire, de s'affranchir ainsi des problèmes de pollutions extérieurs et, pour le technicien en charge de l'intervention, de câbler les réglettes sans avoir à se placer systématiquement en position basse. Le répartiteur selon la présente invention permet également de conserver une bonne densité de réglettes.

La présente invention propose à cet effet un répartiteur de télécommunication comportant :
- une pluralité de moyens de fixation, chacun desdits moyens de fixation étant destiné à recevoir une pluralité de réglettes de connexion,
- un support supportant ladite pluralité de moyens de fixation,
caractérisé en ce que ledit support est rotatif autour d'un axe de rotation, lesdits moyens de fixation étant répartis autour dudit axe de rotation.

Grâce à l'invention, lorsque le répartiteur est dans une armoire, le câblage se fait entièrement à l'intérieur de cette armoire. Les moyens de fixation sont par exemple une ferme sur laquelle est fixée une réglette de connexion. Le support rotatif permet d'amener chacune des réglettes en face avant de l'armoire. Tout le câblage se fait donc à l'intérieur de l'armoire. Le support peut être par exemple une plaque circulaire autour de laquelle sont réparties les différentes fermes. La plaque est rotative autour d'un axe perpendiculaire passant en son centre de sorte qu'en faisant tourner la plaque on peut amener la ferme sélectionnée à la position souhaitée en face avant de l'armoire.

En outre, le répartiteur selon l'invention occupe une place réduite et il n'est pas nécessaire de prévoir un espace supplémentaire autour du répartiteur lors des opérations de câblage.

De plus, les réglettes ne sont jamais au niveau de sol et autorisent ainsi un câblage par le technicien en position debout.

Selon un mode de réalisation particulièrement avantageux, chacun desdits moyens de fixation est rotatif autour d'un axe parallèle au dit axe de rotation, ledit axe étant à proximité du bord latéral desdits moyens de fixation.

Ainsi, une réglette fixée via les moyens de fixation peut pivoter et le technicien en charge d'une intervention a accès aux deux faces de la réglette.

Avantageusement, ledit support comporte une plaque inférieure et une plaque supérieure, lesdits moyens de fixation s'étendant longitudinalement entre lesdites plaques inférieure et supérieure.

Avantageusement, chacun desdits moyens de fixation comporte deux rails parallèles.

Avantageusement, ledit répartiteur comporte des moyens pour bloquer la rotation dudit répartiteur en dehors d'une plage angulaire prédéterminée.

En effet, le répartiteur ne doit pas pouvoir effectuer plusieurs tours qui entraînerait un endommagement des câbles ; les moyens pour bloquer la rotation limite juste la rotation à une plage angulaire permettant l'accès à chacune des réglettes, par exemple par l'avant de l'armoire.

Avantageusement, les moyens de fixation de réglettes sont fixés verticalement sur ledit support.

De manière avantageuse, chacun desdits moyens de fixation comporte un plan de symétrie vertical, lesdits plans de symétrie verticaux ayant pour intersection ledit axe de rotation dudit support.

La présente invention a également pour objet une armoire comportant un répartiteur selon l'invention caractérisé en ce que ladite armoire comporte une ouverture, la rotation dudit support permettant d'amener chacun desdits moyens de fixation en face de ladite ouverture.

D'autres caractéristiques et avantages de la présente invention apparaîtront dans la description suivante d'un mode de réalisation de l'invention, donné à titre illustratif et nullement limitatif.

Dans les figures suivantes :
- La figure 1 représente un répartiteur selon l'invention,
- La figure 2 représente une vue de dessus du répartiteur selon l'invention fixé dans une armoire,
- La figure 3 représente une vue de dessus du répartiteur selon un mode de réalisation particulier de l'invention.

Dans toutes les figures, les éléments communs portent les mêmes numéros de référence.

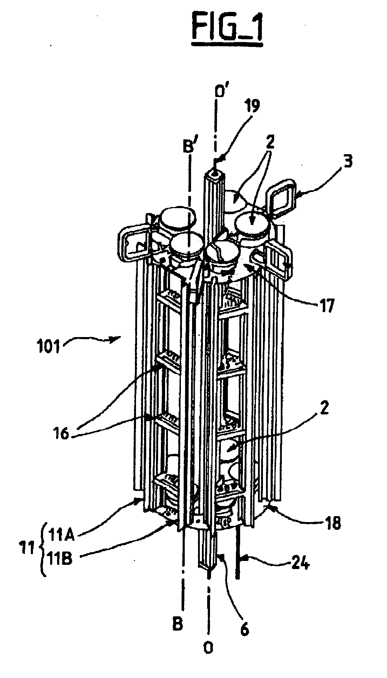

La figure 1 représente un répartiteur 101 selon l'invention.

Le répartiteur 101 comporte :
- une première tige cylindrique 19
- un profilé de maintien 6,
- une plaque supérieure 17,
- une plaque inférieure 18,
- une pluralité de fermes 11,
- une pluralité d'éléments 2 de passage de câbles,
- une pluralité d'anneaux 3 de passage de jarretières
- une deuxième tige cylindrique 24.

Le profilé de maintien 6 est un tube de section carré et est rotatif autour de la première tige cylindrique 19 définissant un axe de rotation 00' du profilé 6.

Chacune des fermes 11 comporte deux rails parallèles 11A et 11B reliés par une pluralité d'entretoises 16 parallèles entre elles et perpendiculaires aux rails. Les entretoises 16 permettent de maintenir un écartement constant entre les rails 11A et 11 B. Les fermes 11 ont une forme sensiblement rectangulaire.

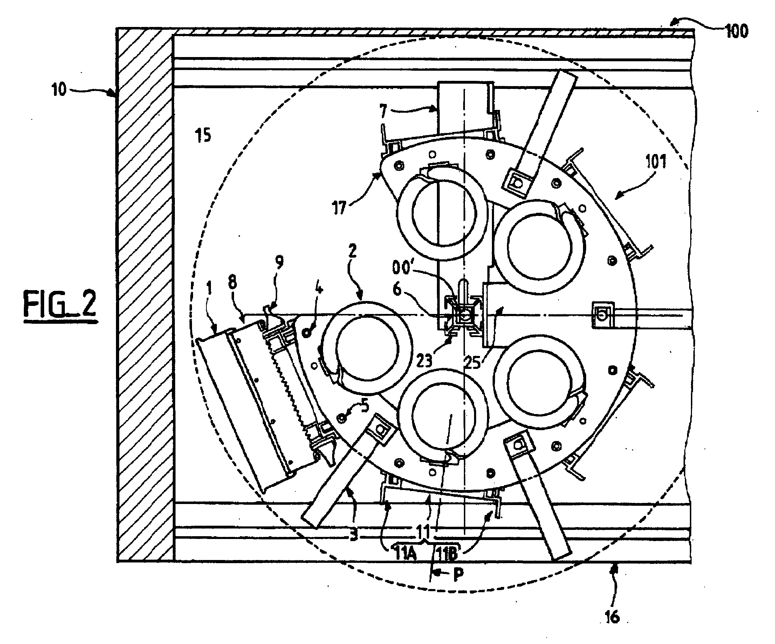

La plaque inférieure 18 comporte une deuxième tige cylindrique 24 parallèle à la première tige 19. Cette deuxième tige 24 permet d'agir en tant que moyens pour bloquer la rotation dudit répartiteur en dehors d'une plage angulaire prédéterminée. La fonction de cette tige 24 sera décrite plus précisément au regard de la figure 2.

La figure 2 représente une vue de dessus du répartiteur 101 tel que représenté en figure 1 fixé dans une armoire 100.

La plaque supérieure 17 est une pièce métallique, par exemple en aluminium, en forme d'anneau ouvert de centre C et comprenant un élément 25 de fixation dirigé vers le centre C.

Chaque ferme 11 possède un plan de symétrie vertical P perpendiculaire au plan de la fe uille, parallèle aux rails 11A et 11B et à égale distance de ceux-ci.

Chacune des fermes 11 permet de recevoir des réglettes de connexions telles que la réglette 8 ; cette réglette 8 peut également comporter un élément de protection 1 contre les surtensions et des moyens de passage 9 permettant de faire passer des câbles d'une face de la réglette vers sa face opposée.

La plaque inférieure 18 est identique à la plaque supérieure 17.

Le profilé 6 est fixé à la plaque 17 en son centre C via l'élément 25 de sorte que l'axe de rotation 00' soit perpendiculaire au plan de la plaque 17.

De façon identique, le profilé 6 est fixé au centre de la plaque inférieur 18 représentée en figure 1.

Chacune des fermes 11 est fixée aux plaques 17 et 18 de sorte que les plans de symétrie verticaux P aient pour intersection l'axe de rotation 00' et les rails 11A et 11B sont parallèles à l'axe de rotation 00'. Les rails 11A et 11B sont donc sensiblement perpendiculaires à la surface des plaques 17 et 18; selon ce mode de réalisation, les rails 11A et 11B sont placés sensiblement tangentiellement aux plaques 17 et 18, chaque ferme étant répartie autour des plaques circulaires 17 et 18.

L'ensemble comportant les plaques supérieures et inférieures 17 et 18 et les fermes 11 est donc rotatif autour de la tige 19 de sorte que l'utilisateur puisse voir accès successivement à chaque ferme en faisant tourner l'ensemble.

Les éléments de passage 2 fixés sur la plaque supérieure 17 permettent de faire sortir les câbles connectés à une réglette sur le dessus du répartiteur 101 pour les amener par exemple à des équipements tels que des cartes électroniques.

Des éléments de passage 2 sont également fixés sur la plaque inférieure 18 et permettent de faire rentrer des câbles venant du dessous du répartiteur 101, par exemple d'abonnés, pour les connecter à une réglette.

Les anneaux 3 fixés sur la plaque supérieure 17 permettent le passage de jarretières à l'intérieur du répartiteur d'une réglette à une autre.

Le répartiteur 101 tel que représenté en figure 2 comporte cinq fermes 11 qui sont réparties entre un premier ensemble comportant par exemple trois fermes permettant les connexions vers les abonnés et un deuxième ensemble comportant deux fermes permettant les connexions vers des cartes électroniques. Le lien électrique entre ces eux ensembles se fait par les jarretières.

L'armoire 100 comporte un châssis 10 ayant sensiblement la forme d'un parallélépipède rectangle définissant un volume 15 dans lequel est fixé le répartiteur 101 via la première tige 19 telle que représentée en figure 1 qui est fixée sur un support supérieur 23 solidaire de l'armoire 100 et un support inférieur 7 solidaire de l'armoire 100. Le support 7 en forme de parallélépipède rectangle s'étend du centre de l'armoire jusqu'à la face opposée à l'ouverture 16. Ainsi, la tige 24 telle que représentée en figure 1 vient en butée sur ce support 7 lorsqu'on fait tourner le répartiteur 101 si bien que ce dernier ne peut effectuer plus d'un tour sur lui-même.

Le châssis 10 a une face présentant une ouverture 16 généralement fermée par une porte non représentée..

Chacune des fermes 11 peut être amenée par rotation du répartiteur 101 en face de l'ouverture 16.

L'armoire 100 peut être une armoire se trouvant à l'extérieur, le câblage des réglettes 8 se faisant exclusivement à l'intérieur de l'armoire 100 en accédant à la réglette souhaitée par rotation du répartiteur 101.

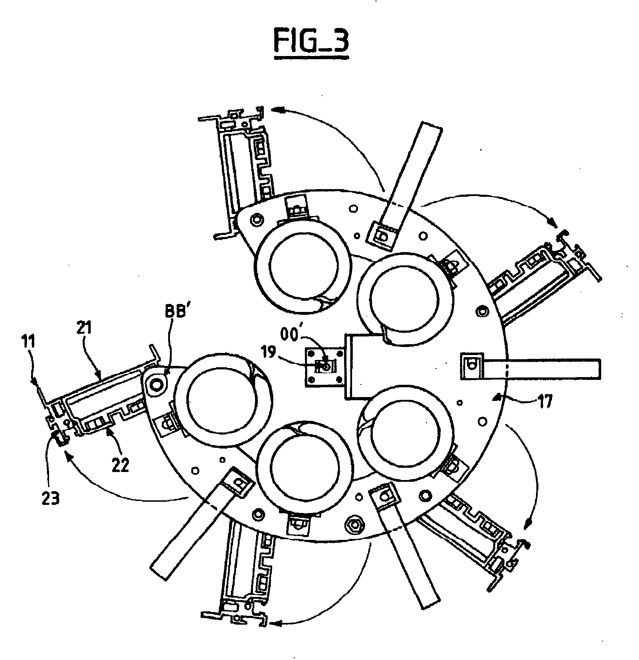

La figure 3 représente une vue de dessus du répartiteur selon un mode de réalisation particulier de l'invention.

Selon ce mode de réalisation, chacune des fermes 11 est rotative autour d'un axe BB' parallèle à l'axe 00' de rotation, ledit axe BB' étant à proximité d'un des bords latéraux de la ferme 11.

Une telle rotation permet l'accès aux deux faces 21 et 22 de la ferme 11 et donc aux deux faces d'une réglette fixée sur cette ferme lors d'une intervention de connexion.

Lorsque l'intervention est achevée, la ferme 11 est fixée sur la plaque supérieure 17, par exemple via un élément de clipsage 23.

Bien entendu, l'invention n'est pas limitée au mode de réalisation qui vient d'être décrit.

Notamment, le mode de réalisation décrit concernait plus spécialement le câblage des câbles de cuivre mais l'invention peut être également utilisée dans le cadre d'un répartiteur pour fibres optiques.

En outre, l'invention a été plus particulièrement décrite pour un répartiteur destiné à être inséré dans une armoire du type armoire extérieure. Cependant, le répartiteur selon l'invention peut également être inséré dans tout type d'armoire telle q u'une armoire baie.

De plus, le répartiteur selon l'invention a été décrit comme comportant deux plaques inférieure et supérieure mais on peut également envisager une seule plaque sur laquelle sont fixées les fermes.

Notons également que les fermes ont été décrites comme tangentielles aux plaques supérieure et inférieure mais les fermes peuvent aussi être légèrement inclinées par rapport à la tangente.

Enfin, le répartiteur peut également être utilisé en salle hors d'une armoire.

## Revendications

1. Répartiteur de télécommunication (101) comportant :
- une pluralité de moyens de fixation (11), chacun desdits moyens de fixation (11) étant destiné à recevoir une pluralité de réglettes de connexion (8),
- un support (17, 18) supportant ladite pluralité de moyens de fixation (11),
**caractérisé en ce que** ledit support est rotatif autour d'un axe de rotation (00'), lesdits moyens de fixation étant répartis autour dudit axe de rotation.

2. Répartiteur de télécommunication (101) selon l'une des revendications précédentes **caractérisé en ce que** lesdits moyens de fixation (11) sont fixés verticalement sur ledit support.

3. Répartiteur de télécommunication (101) selon l'une des revendications précédentes **caractérisé en ce que** chacun desdits moyens de fixation (11) comporte un plan de symétrie vertical (P), lesdits plans de symétrie verticaux ayant pour intersection ledit axe de rotation (00') dudit support.

4. Répartiteur de télécommunication (101) selon la revendication 1 **caractérisé en ce que** chacun desdits moyens de fixation (11) est rotatif autour d'un axe (BB') parallèle au dit axe de rotation (00'), ledit axe (BB') étant à proximité du bord latéral desdits moyens de fixation (11).

5. Répartiteur de télécommunication (101) selon l'une des revendications précédentes **caractérisé en ce que** ledit support comporte une plaque inférieure (18) et une plaque supérieure (17), lesdits moyens de fixation (11) s'étendant longitudinalement entre lesdites plaques inférieure et supérieure.

6. Répartiteur de télécommunication (101) selon l'une des revendications précédentes **caractérisé en ce que** chacun desdits moyens de fixation (11) comporte deux rails (11A, 11B) parallèles.

7. Répartiteur de télécommunication (101) **caractérisé en ce que** ledit répartiteur comporte des moyens (24) pour bloquer la rotation dudit répartiteur en dehors d'une plage angulaire prédéterminée.

8. Armoire (100) comportant un répartiteur (101) selon l'une des revendications précédentes **caractérisée en ce que** ladite armoire comporte une ouverture (16), la rotation dudit support permettant d'amener chacun desdits moyens de fixation (11) en face de ladite ouverture (16).
